# EUROPEAN PATENT APPLICATION

(11) **EP 0 557 533 A1**
(43) Date of publication of application: **01.09.1993**
(21) Application number: 92919512.1
(22) Date of filing: 14.09.1992
(51) Int. Cl.: C08J 9/14, C09K 3/00

(54) **BLOWING AGENT COMPOSITION**

(30) Priority: 12.09.1991 JP 233204/91; 12.09.1991 JP 233205/91; 26.09.1991 JP 247989/91; 26.09.1991 JP 247990/91; 26.09.1991 JP 247991/91; 26.09.1991 JP 247992/91
(71) Applicant: DAIKIN INDUSTRIES, LTD., Kita-ku, Osaka 530 (JP)
(72) Inventor: OMURE, Yukio Yodogawa Seisakusho Daikinkogyo K K, Osaka 566 (JP); IDE, Satoshi Yodogawa Seisakusho Daikinkogyo K K, Osaka 566 (JP)
(74) Representative: Schüler, Horst, Dr.
(86) International application number: JP9201169
(87) International publication number: WO9305105

(57) **Abstract**

A blowing agent composition comprising at least one member selected from the group consisting of pentafluoroethane, 1,1,1,2-tetrafluoroethane and 1,1,1,2,3,3,3-heptafluoropropane, and either difluoromethane and/or 1,1,1,-trifluoroethane, or 1,1-difluroethane and/or LPG.

## Description

### Technical Field

The present invention relates to a blowing composition for use in the production of foams (foamed articles) of thermoplastic resins such as polystyrene, polyethylene, polypropylene, etc. and to a method for producing a thermoplastic resin foam characterized by employing said composition.

In this specification and claims, "%" and "parts" mean "weight %" and "weight parts", respectively.

### Background Art

As blowing agents for the production of thermoplastic resin foams, halogenated hydrocarbons such as dichlorodifluoromethane (CFC-12), dichlorotetrafluoroethane (CFC-114), etc. have heretofore been employed. However, the industry has recently been alerted to the fact that when released into the atmosphere, a group of CFCs destroy the ozone layer of the stratosphere to exert serious harmful effects on the earth ecology including man. Therefore, the use and production of such ozone-unfriendly CFC's have come to be restricted by international conventions. CFC-12, mentioned above, is one of those substances subject to control and if only in consideration of these circumstances it is essential for the industry to develop a new blowing agent with no ozone depletion potential or with a much reduced ozone depletion potential.

In this connection, US Patent No. 4,978,467 discloses the use of an azeotrope-like mixture of pentafluoroethane (hereinafter referred to as HFC-125) and difluoromethane (hereinafter referred to as HFC-32) as a refrigerant. JP Kokai 63-308,085 discloses a mixture of 1,1,1,2-tetrafluoroethane (hereinafter referred to as HFC-134a) and 1,1,1-trifluoroethane (hereinafter referred to as HFC-143a) and JP Kokai 3-168264 discloses a mixture of HFC-134a, HFC-32 and HFC-143a, both as a refrigerant. JP Kokai 63-308084 discloses a mixture of HFC-134a and 1,1-difluoroethane (hereinafter referred to as HFC-152a) as a refrigerant. However, none of the literature suggest the use of such compositions as the blowing agent.

### Disclosure of the Invention

The inventor of the present invention, who was engaged in intensive research with a view to solving the above drawbacks of the prior art, discovered that a blowing composition comprising a mixture of (1) at least one member of the group consisting of HFC-125, HFC-134a and 1,1,1,2,3,3,3-heptafluoropropane (hereinafter referred to as HFC-227) and (2) HFC-32 and/or HFC-143a or HFC-152a and/or LPG has blowing characteristics which cannot be predicated from those of the component substances taken individually, thus being an excellent blowing system for the production of thermoplastic resin foams. The present invention is the outcome of the above research and finding.

Thus, the present invention provides the following compositions:
* A blowing composition comprising (1) at least one member of the group consisting of HFC-125, HFC-134a and HFC-227 and (2) HFC-32 and/or HFC-143a or HFC-152a and/or LPG (hereinafter referred to as Composition X);
* A blowing composition comprising (1) HFC-125 and (2) HFC-32 and/or HFC-143a (hereinafter referred to as Composition I);
* A blowing composition comprising (1) 80 to 20% of HFC-125 and (2) 20 to 80% of HFC-32 and/or HFC-143a;
* A blowing composition comprising (1) 80 to 30% of HFC-125 and (2) 20 to 70% of HFC-32;
* A blowing composition comprising (1) 80 to 50% of HFC-125 and (2) 20 to 50% of HFC-143a;
* A blowing composition comprising (1) 80 to 40% of HFC-125 and (2) 10 to 30% of HFC-32 and 10 to 30% of HFC-143a;
* A blowing composition comprising (1) HFC-125 and (2) HFC-152a and/or LPG (hereinafter referred to as Composition II);
* A blowing composition as set forth in claim 1 which comprises (1) 90 to 10% of HFC-125 and (2) 10 to 90% of HFC-152a and/or LPG;
* A blowing composition comprising (1) 80 to 20% of HFC-125 and (2) 10 to 40% of HFC-152a and 10 to 40% of LPG;
* A blowing composition comprising (1) 90 to 70% of HFC-125 and (2) 10 to 30% of HFC-152a;
* A blowing composition comprising (1) HFC-134a and (2) HFC-32 and/or HFC-143a (hereinafter referred to as Composition III);
* A blowing composition comprising (1) 80 to 20% of HFC-134a and (2) 20 to 80% of HFC-32 and/or HFC-143a;
* A blowing composition comprising (1) 80 to 20% of HFC-134a and (2) 10 to 40% of HFC-32 and 10 to 40% of HFC-143a;
* A blowing composition comprising (1) 80 to 50% of HFC-134a and (2) 20 to 50% of HFC-32;
* A blowing composition comprising (1) HFC-134a and (2) HFC-152a and/or LPG (hereinafter referred to as Composition IV);
* A blowing composition comprising (1) 90 to 10% of HFC-134a and (2) 10 to 90% of HFC-152a and/or LPG;
* A blowing composition comprising (1) 80 to 20% of HFC-134a and (2) 10 to 40% of HFC-152a and 10 to 40% of LPG;
* A blowing composition comprising (1) 90 to 80% of HFC-134a and (2) 10 to 20% of HFC-152a;
* A blowing composition comprising (1) HFC-227 and (2) HFC-32 and/or HFC-143a (hereinafter referred to as Composition V);
* A blowing composition comprising (1) 90 to 10% of HFC-227 and (2) 10 to 90% of HFC-32 and/or HFC-143a;
* A blowing composition comprising (1) 80 to 20% of HFC-227 and (2) 10 to 40% of HFC-32 and 10 to 40% of HFC-143a;
* A blowing composition comprising (1) 90 to 30% of HFC-227 and (2) 10 to 70% of HFC-143a;
* A blowing composition comprising (1) 90 to 20% of HFC-227 and (2) 10 to 80% of HFC-32;
* A blowing composition comprising (1) HFC-227 and (2) HFC-152a and/or LPG (hereinafter referred to as Composition VI);
* A blowing agent comprising (1) 90 to 10% of HFC-227 and (2) 10 to 90% of HFC-152a and/or LPG;
* A blowing composition comprising (1) 80 to 20% of HFC-227 and (2) 10 to 40% of HFC-152a and 10 to 40% of LPG;
* A blowing composition comprising (1) 90 to 70% of HFC-227 and (2) 10 to 30% of HFC-152a; and
* A blowing composition comprising (1) 90 to 85% of HFC-227 and (2) 10 to 15% of LPG.

The present invention further provides the following methods for producing thermoplastic resin foams.
* A method for producing a thermoplastic resin foam characterized by using Composition X as a blowing agent;
* A method for producing a thermoplastic resin foam characterized by using Composition I as a blowing agent;
* A method for producing a thermoplastic resin foam characterized by using Composition II as a blowing agent;
* A method for producing a thermoplastic resin foam characterized by using Composition III as a blowing agent;
* A method for producing a thermoplastic resin foam characterized by using Composition IV as a blowing agent;
* A method for producing a thermoplastic resin foam characterized by using Composition V as a blowing agent;
* A method for producing a thermoplastic resin foam characterized by using Composition VI as a blowing agent.

The physical properties of HFC-32, HFC-125, HFC-134a, HFC-143a, HFC-152a, HFC-227 and LPG, the component substances used in the blowing system of the present invention, are presented below in Table 1.

**Table 1**

| | Formula | Molecular Weight | Boiling Point (°C) | Ozone Depleting Potentials |
|---|---|---|---|---|
| HFC-32 | CH₂F₂ | 52 | -52 | 0 |
| HFC-125 | CHF₂CF₃ | 120 | -48 | 0 |
| HFC-134a | CF₃CH₂F | 102 | -26 | 0 |
| HFC-143a | CF₃CH₃ | 84 | -48 | 0 |
| HFC-152a | CHF₂CH₃ | 66 | -25 | 0 |
| HFC-227 | CF₃CHFCF₃ | 170 | -18 | 0 |
| LPG | CH₃(CH₂)₂CH₃ | 58 | 0 | 0 |

Regarding LPG as used in the present invention, any known LPG that is predominantly composed of hydrocarbons of 3 to 4 carbon atoms can be liberally utilized.

In the blowing system of the invention, the component substances mentioned above for the respective compositions is invariably used in combination.

### Composition I

The preferred ratio of (1) HFC-125 to (2) HFC-32 and/or HFC-143a, with the sum of (1) and (2) being taken as 100%, is as follows.
HFC-125 : HFC-32 = 80-20% : 20-80%;
HFC-125 : HFC-143a = 80-20% : 20-80%; and
HFC-125 : HFC-32 : HFC-143a = 80-20% : 10-40% : 10-40%.

The ratios of components for providing a nonflammable blowing system are as follows.
HFC-125 : HFC-32 = 80-30% : 20-70%;
HFC-125 : HFC-143a = 80-50% : 20-50%;
HFC-125 : HFC-32 : HFC-143a = 80-40% : 10-30% : 10-30%.

### Composition II

The preferred ratio of (1) HFC-125 to (2) HFC-152a and/or LPG, with the sum of (1) and (2) being taken as 100%, is as follows.
HFC-125 : HFC-152a = 90-10% : 10-90%
HFC-125 : LPG = 90-10% : 10-90%
The more preferred ratio is as follows. HFC-125 : HFC-152a : LPG = 80-20% : 10-40% : 10-40%.

The ratio of components for providing a nonflammable blowing system is as follows.
HFC-125 : HFC-152a = 90-70% : 10-30%.

### Composition III

The preferred ratio of (1) HFC-134a to (2) HFC-32 and/or HFC-143a, with the sum of (1) and (2) being taken as 100%, is as follows.
HFC-134a : HFC-32 = 80-20% : 20-80%;
HFC-134a : HFC-143a = 80-20% : 20-80%.

The more preferred ratio is as follows.
HFC-134a : HFC-32 : HFC-143a = 80-20% : 10-40% : 10-40%.

The ratio of components for providing a nonflammable blowing system is as follows.
HFC-134a : HFC-32 = 80-50% : 20-50%.

### Composition IV

The preferred ratio of (1) HFC-134a to (2) HFC-152a and/or LPG, with the sum of (1) and (2) being taken as 100%, is as follows.
HFC-134a : HFC-152a = 90-10% : 10-90%;
HFC-134a : LPG = 90-10% : 10-90%.

The more preferred ratio is as follows.
HFC-134a : HFC-152a : LPG = 80- 20% : 10-40% : 10-40.

The ratio of components for providing a nonflam mable blowing system is as follows.
HFC-134a : HFC-152a = 90-80% : 10-20%.

### Composition V

The preferred ratio of (1) HFC-227 to (2) HFC-32 and/or HFC-143a, with the sum of (1) and (2) being taken as 100%, is as follows.
HFC-227 : HFC-32 = 90-10% : 10-90%;
HFC-227 : HFC-143a = 90-10% : 10-90%.

The more preferred ratio is as follows.
HFC-227 : HFC-32 : HFC-143a = 80-20% : 10-40% : 10-40%.

The ratio of components for providing a nonflammable blowing system is as follows.
HFC-227 : HFC-32 = 90-20% : 10-80%;
HFC-227 : HFC-143a = 90-30% : 10-70%;
HFC-227 : HFC-32 : HFC-143a = 80-20% : 10-40% : 10-40%.

### Composition VI

The preferred ratio of (1) HFC-227 to (2) HFC-152a and/or LPG is as follows.
HFC-227 : HFC-152a = 90-10% : 10-90%; and
HFC-227 : LPG = 90-10% : 10-90%.

The more preferred ratio is:
HFC-227 : HFC-152a : LPG = 80-20% : 10-40% : 10-40%.

The ratio of components for providing a nonflammable blowing system is as follows.
HFC-227 : HFC-152a = 90-70% : 10-30%;
HFC-227 : LPG = 90-85% : 10-15%.

Justification of the preferred ratio indicated above for each of compositions I through VI is as follows.

### Composition I

When the proportion of HFC-125 exceeds 80%, a low-expansion foam or a defective foam tends to be produced.

On the other hand, when the proportion of HFC-32 and/or HFC-143a exceeds 80%, the foam tends to be poor in dimensional stability and presents with an inferior surface appearance with a relatively large number of wrinkles. Moreover, the composition becomes inflammable to present a risk of explosion hazard.

### Composition II

Any proportion of HFC-125 in excess of 90% is undesirable, for a low-expansion foam or a defective foam tends to be produced.

On the other hand, when the proportion of HFC-152a or LPG exceeds 90%, the resulting foam tends to be poor in dimensional stability and presents with an inferior surface appearance with a relatively large number of wrinkles. Moreover, the composition becomes inflammable to present a risk of explosion hazard.

### Composition III

When the proportion of HFC-134a exceeds 80%, a low-expansion foam or a defective foam tends to be produced.

On the other hand, when the proportion of HFC-32 and/or HFC-143a exceeds 80%, the resulting foam tends to be unsatisfactory in dimensional stability and presents with a poor surface appearance showing a relatively large number of wrinkles. Furthermore, the composition becomes inflammable to present a risk of explosion hazard.

### Composition IV

When the proportion of HFC-134a exceeds 80%, a low-expansion foam or a defective foam tends to be produced.

On the other hand, if the proportion of HFC-152a or LPG exceeds 80%, the foam tends to be poor in dimensional stability and presents with a poor surface appearance showing a relatively large number of wrinkles. Furthermore, the composition becomes inflammable to present a risk of explosion hazard.

### Composition V

When the proportion of HFC-227 exceeds 90%, a low-expansion foam or a defective foam tends to be produced.

On the other hand, when the proportion of HFC-32 and/or HFC-143a exceeds 90%, the resulting foam tends to be unsatisfactory in dimensional stability and presents with a poor surface appearance showing a relatively large number of wrinkles. Furthermore, the composition becomes inflammable to present a risk of explosion hazard.

### Composition VI

When the proportion of HFC-227 exceeds 90%, a low-expansion foam or a defective foam tends to be produced.

On the other hand, when the proportion of HFC-152a or LPG exceeds 90%, the resulting foam tends to be unsatisfactory in dimensional stability and presents with a poor surface appearance showing a relatively large number of wrinkles. Furthermore, the composition becomes inflammable to present a risk of explosion hazard.

In the blowing composition of the present invention, a decomposition inhibitor may be incorporated as necessary.

The preferred decomposition inhibitor is at least one compound selected from the group consisting of nitro compounds, unsaturated hydrocarbons, epoxy compounds, ether compounds, phenol compounds, ester compounds, alkylamine compounds, cyclic nitrogen compounds and unsaturated alcohol compounds.

The blowing composition of the present invention can be used in the same manner as the known blowing agents for the production of thermoplastic resin foams.

The foaming material, viz. the substrate material to be foamed, includes, among others, polystyrene, polyethylene, polypropylene and the corresponding copolymers.

The effective amount of the blowing agent of the invention relative to the substrate material may be the same as that of the known blowing agents and can be selected according to the type of substrate resin material and the desired foam density, among other factors. Generally, however, about 0.001 to 0.5 mole can be used to each 100 grams of the substrate material.

The procedure to be followed for the production of resin foams employing the blowing agent of the present invention is also similar to the conventional one. Thus, there can be mentioned, inter alia, (a) a process comprising melting the substrate resin by heating, mixing the blowing agent with the melt at elevated temperature and pressure and extruding the molten mixture into a low-pressure zone for expansion, (b) a batch foaming process comprising melting the substrate resin by heating, mixing the blowing agent with the melt at elevated temperature and pressure and decompressing the system for expansion, and (c) a thermal foaming process comprising crosslinking the substrate resin by means of an electron beam or a chemical crosslinking agent, adding the blowing agent thereto and heating the mixture for expansion.

The blowing agent of the present invention can be used in the manufacture of a variety of shaped articles such as sheet, block, bar, tube, cladding (electric wire or cable insulating cover) and pattern moldings.

The present invention accomplishes the following effects.

The substances used according to the invention, namely HFC-32, HFC-125, HFC-134a, HFC-143a, HFC-152a, HFC-227 and LPG, invariably have an ozone depleting potentials of 0 (nil) or no risk for destruction of the ozone layer.

Moreover, the use of the blowing system of the invention in the nonflammable composition range insures working safety and is, therefor, preferred.

Furthermore, the blowing system (Compositions X and I through VI) of the present invention is superior to any of its components used alone in terms of stability and provides foams very satisfactory in homogeneity, compressive strength and dimensional stability.

### Examples

The following examples and comparative examples are intended to point out the salient features of the invention with further clarity.

In the following description, the components of the blowing compositions used in the examples and comparative examples are abbreviated as follows.
* Difluoromethane : 32
* Pentafluoroethane : 125
* 1,1,1,2-Tetrafluoroethane : 134a
* 1,1,1-Trifluoroethane : 143a
* 1,1-Difluoroethane : 152a
* 1,1,1,2,3,3,3-Heptafluoropropane : 227
* 1,1-Difluoro-1-chloroethane : 142b
As to LPG, LPG of the following composition was used.
n-Butane : 59.8%
i-Butane : 35.6%
Propane : 3.7%

### Examples I-1 through I-9 and Comparative Examples I-1 through I-3

Polyethylene foams were produced in the following manner.

To 100 parts of a low-density polyethylene resin (melt index 2.3, density 0.921 g/cm³) were added 0.5 part of finely divided talc and, as a dimensional stabilizer, 1.0 part of stearamide concentrate and the mixture was evenly premixed.

According to the formulas shown in Table 2-A-I which appears below, blowing compositions comprising 125 and 32 and/or 143a according to the invention were prepared. In Table 2-B-I, blowing agents outside the compositional range of the invention are also shown as Comparative Examples I-1 through I-3.

In all the examples and comparative examples, the same equipment was employed. The equipment was a screw extruder comprising a hopper, feed section, metering section, melting section, mixing section and cooling section, with a blowing agent injection port in the center of the cylinder.

The die used was a rod die having a resin discharge orifice 4 mm in diameter. The temperatures of the various sections of the extruder were about 140°C in the feed section, about 180°C in the metering and melting sections, about 150°C in the mixing section, and about 110°C in the cooling section.

The above raw resin material was fed from the hopper at the rate of about 5 kg per hour and the blowing composition was injected in the proportion indicated in Table 2-A-I and Table 2-B-I. The mixing ratio represents the amount of the blowing agent in parts by weight to each 100 parts by weight of the resin.

The resin expanded remarkably upon discharge from the nozzle to give a rod-shaped foam with a diameter of 30 to 40 mm.

The product foam was evaluated for density, stability and appearance. The results are presented below in Table 2-A-I and Table 2-B-I.

**Table 2-A-I**

| Example No. | Blowing agent | Composition (%) | Mixing ratio (parts) | Foam density (g/cm³) | Foam stability (%) | Appearance |
|---|---|---|---|---|---|---|
| I-1 | 125 | 80 | 9.5 | 0.044 | 90 | ⃝ |
| | 32 | 20 | | | | |
| I-2 | 125 | 50 | 7.3 | 0.036 | 96 | ⓞ |
| | 32 | 50 | | | | |
| I-3 | 125 | 20 | 6.1 | 0.035 | 94 | ⃝ |
| | 32 | 80 | | | | |
| I-4 | 125 | 80 | 11.1 | 0.045 | 90 | ⃝ |
| | 143a | 20 | | | | |
| I-5 | 125 | 50 | 10.0 | 0.037 | 94 | ⓞ |
| | 143a | 50 | | | | |
| I-6 | 125 | 20 | 8.9 | 0.036 | 92 | ⃝ |
| | 143a | 80 | | | | |
| I-7 | 125 | 80 | 10.2 | 0.044 | 90 | ⃝ |
| | 32 | 10 | | | | |
| | 143a | 10 | | | | |
| I-8 | 125 | 50 | 8.4 | 0.036 | 96 | ⓞ |
| | 32 | 25 | | | | |
| | 143a | 25 | | | | |
| I-9 | 125 | 40 | 7.8 | 0.036 | 94 | ⃝ |
| | 32 | 30 | | | | |
| | 143a | 30 | | | | |

**Table 2-B-I**

| Comparative Example No. | Blowing agent | Composition (%) | Mixing ratio (parts) | Foam density (g/cm³) | Foam stability (%) | Appearance |
|---|---|---|---|---|---|---|
| I-1 | 125 | 100 | 12.0 | - | - | x |
| I-2 | 32 | 100 | 5.2 | 0.030 | 80 | x |
| I-3 | 143a | 100 | 8.4 | 0.032 | 85 | △ |

In the above and following tables, the foam stability is the volume fraction of the foam after one day of standing at room temperature, with the volume of the foam immediately after extrusion being taken as 100.

The appearance of the foam was the result of evaluation for surface smoothness and skin condition on the following scale:
ⓞ Excellent, ⃝ Good, △ Ordinary, x Poor.

In Comparative Example I-1 where 125 was used as the blowing agent, no foaming took place.

In Comparative Examples I-2 and I-3 where 32 and 143a were respectively used as the blowing agent, the product foam was poor in dimensional stability and presented with a copiously wrinkled surface.

The data presented in Table 2-A-I and Table 2-B-I indicate clearly that compared with the control blowing agents, the blowing composition I of the present invention is superior in all the parameters evaluated, i.e. density, stability and appearance.

### Examples II-1 through II-9 and Comparative Examples II-1 through II-4

Polyethylene foams were produced in the same manner as Example I-1.

Blowing compositions comprising 125 and 152a and/or LPG according to the invention were prepared in accordance with the formulas indicated below in Table 2-A-II. In Table 2-B-II, blowing agents outside the compositional range of the invention are shown as Comparative Examples Nos. II-1 through II-4.

The above blowing agents were respectively injected into the foaming material in the mixing ratios shown in Table 2-A-II and Table 2-B-II.

The results are set forth in Table 2-A-II and Table 2-B-II.

**Table 2-A-II**

| Example No. | Blowing agent | Composition (%) | Mixing ratio (parts) | Foam density (g/cm³) | Foam stability (%) | Appearance |
|---|---|---|---|---|---|---|
| II-1 | 125 | 90 | 11.1 | 0.042 | 92 | ⃝ |
| | 152a | 10 | | | | |
| II-2 | 125 | 50 | 8.5 | 0.034 | 96 | ⓞ |
| | 152a | 50 | | | | |
| II-3 | 125 | 10 | 6.9 | 0.036 | 95 | ⃝ |
| | 152a | 90 | | | | |
| II-4 | 125 | 90 | 10.8 | 0.040 | 95 | ⃝ |
| | LPG | 10 | | | | |
| II-5 | 125 | 50 | 8.0 | 0.034 | 96 | ⓞ |
| | LPG | 50 | | | | |
| II-6 | 125 | 10 | 6.1 | 0.032 | 90 | ⃝ |
| | LPG | 90 | | | | |
| II-7 | 125 | 80 | 10.4 | 0.040 | 95 | ⃝ |
| | 152a | 10 | | | | |
| | LPG | 10 | | | | |
| II-8 | 125 | 50 | 8.2 | 0.034 | 94 | ⓞ |
| | 152a | 25 | | | | |
| | LPG | 25 | | | | |
| II-9 | 125 | 20 | 7.0 | 0.033 | 90 | ⃝ |
| | 152a | 40 | | | | |
| | LPG | 40 | | | | |

**Table 2-B-II**

| comparative Example No. | Blowing agent | Composition (%) | Mixing ratio (parts) | Foam density (g/cm³) | Foam stability (%) | Appearance |
|---|---|---|---|---|---|---|
| II-1 | 125 | 100 | 12.0 | - | - | x |
| II-2 | 152a | 100 | 6.6 | 0.034 | 90 | △ |
| II-3 | LPG | 100 | 5.8 | 0.030 | 80 | x |
| II-4 | 152a | 50 | 8.0 | 0.030 | 80 | x |
| | 142b | 50 | | | | |

In Comparative Example II-1 where 125 was used as the blowing agent, no foaming took place.

In comparative Example II-2 where 152a was used as the blowing agent, the product foam was poor in dimensional stability and had a copiously wrinkled surface.

In Comparative Example II-4 where a mixture of 152a and 142b was employed, too, the product foam had a poor appearance.

It is clear from the data in Table 2-A-II and Table 2-B-II that compared with the control blowing agents, the blowing compositions of the invention are superior in all the parameters of density, stability and appearance.

### Examples III-1 through III-9 and Comparative Examples III-1 through III-3

Polyethylene foams were produced in the same manner as Example I-1.

Using the formulas shown below in Table 2-A-III, blowing compositions comprising 134a and 32 and/or 143a according to the invention were prepared. In Table 2-B-III, blowing agents outside the compositional range of the invention are shown as Comparative Examples III-1 through III-3.

The above blowing agents were respectively injected into the above resin material in the mixing ratios indicated in Table 2-A-III and Table 2-B-III.

The results are set forth in Table 2-A-III and Table 2-B-III.

**Table 2-A-III**

| Example No. | Blowing agent | Composition (%) | Mixing ratio (parts) | Foam density (g/cm³) | Foam stability (%) | Appearance |
|---|---|---|---|---|---|---|
| III-1 | 134a | 80 | 8.6 | 0.036 | 96 | ⓞ |
| | 32 | 20 | | | | |
| III-2 | 134a | 50 | 6.9 | 0.035 | 95 | ⓞ |
| | 32 | 50 | | | | |
| III-3 | 134a | 20 | 6.0 | 0.036 | 92 | ⃝ |
| | 32 | 80 | | | | |
| III-4 | 134a | 80 | 9.8 | 0.035 | 96 | ⓞ |
| | 143a | 20 | | | | |
| III-5 | 134a | 50 | 9.3 | 0.035 | 96 | ⓞ |
| | 143a | 50 | | | | |
| III-6 | 134a | 20 | 8.7 | 0.036 | 92 | ⃝ |
| | 143a | 80 | | | | |
| III-7 | 134a | 80 | 9.1 | 0.036 | 96 | ⓞ |
| | 32 | 10 | | | | |
| | 143a | 10 | | | | |
| III-8 | 134a | 50 | 8.0 | 0.035 | 96 | ⓞ |
| | 32 | 25 | | | | |
| | 143a | 25 | | | | |
| III-9 | 134a | 20 | 6.9 | 0.035 | 93 | ⃝ |
| | 32 | 40 | | | | |
| | 143a | 40 | | | | |

**Table 2-B-III**

| comparative Example No. | Blowing agent | Composition (%) | Mixing ratio (parts) | Foam density (g/cm³) | Foam stability (%) | Appearance |
|---|---|---|---|---|---|---|
| III-1 | 134a | 100 | 10.2 | - | - | x |
| III-2 | 32 | 100 | 5.2 | 0.030 | 80 | x |
| III-3 | 143a | 100 | 8.4 | 0.032 | 85 | △ |

In Comparative Example III-1 where 134a was used as the blowing agent, no foaming took place.

In Comparative Examples III-2 and III-3, where 32 and 143a were respectively used as the blowing agent, the product foams were poor in dimensional stability and each had a copiously wrinkled surface.

It is apparent from the data in Table 2-A-III and Table 2-B-III that compared with the control blowing agents, the blowing compositions of the present invention are superior in all the parameters of density, stability and appearance.

### Examples IV-1 through IV-9 and Comparative Examples IV-1 through IV-3

Polyethylene foams were produced in the same manner as Example I-1.

Using the formulas shown below in Table 2-A-IV, blowing compositions comprising 134a and 152a and/or LPG according to the invention were prepared. In Table 2-B-IV, blowing agents outside the compositional range of the invention are shown as Comparative Examples IV-1 through IV-3.

The above blowing agents were respectively injected into the resin material in the mixing ratios indicated in Table 2-A-IV and Table 2-B-IV.

The results are set forth in Table 2-A-IV and Table 2-B-IV.

**Table 2-A-IV**

| Example No. | Blowing agent | Composition (%) | Mixing ratio (parts) | Foam density (g/cm³) | Foam stability (%) | Appearance |
|---|---|---|---|---|---|---|
| IV-1 | 134a | 90 | 9.7 | 0.038 | 92 | ⃝ |
| | 152a | 10 | | | | |
| IV-2 | 134a | 50 | 8.0 | 0.036 | 96 | ⓞ |
| | 152a | 50 | | | | |
| IV-3 | 134a | 10 | 6.8 | 0.035 | 90 | ⃝ |
| | 152a | 90 | | | | |
| IV-4 | 134a | 90 | 9.5 | 0.036 | 94 | ⃝ |
| | LPG | 10 | | | | |
| IV-5 | 134a | 50 | 7.4 | 0.035 | 96 | ⓞ |
| | LPG | 50 | | | | |
| IV-6 | 134a | 10 | 6.4 | 0.033 | 92 | ⃝ |
| | LPG | 90 | | | | |
| IV-7 | 134a | 80 | 9.2 | 0.036 | 94 | ⃝ |
| | 152a | 10 | | | | |
| | LPG | 10 | | | | |
| IV-8 | 134a | 50 | 7.9 | 0.035 | 96 | ⓞ |
| | 152a | 25 | | | | |
| | LPG | 25 | | | | |
| IV-9 | 134a | 20 | 6.7 | 0.034 | 92 | ⃝ |
| | 152a | 40 | | | | |
| | LPG | 40 | | | | |

**Table 2-B-IV**

| comparative Example No. | Blowing agent | Composition (%) | Mixing ratio (parts) | Foam density (g/cm³) | Foam stability (%) | Appearance |
|---|---|---|---|---|---|---|
| IV-1 | 134a | 100 | 10.2 | - | - | x |
| IV-2 | 152a | 100 | 6.6 | 0.034 | 90 | △ |
| IV-3 | LPG | 100 | 5.8 | 0.030 | 80 | x |

In Comparative Example IV-1 where 134a was used as the blowing agent, no foaming took place.

In Comparative Examples IV-2 and IV-3 where 152a and LPG were respectively used as the blowing agent, the product foams were poor in dimensional stability and each had a copiously wrinkled surface.

It is apparent from the data in Table 2-A-IV and Table 2-B-IV that compared with the control blowing agents, the blowing compositions of the present invention are superior in all the parameters of density, stability and appearance.

### Examples V-1 through V-9 and Comparative Examples V-1 through V-3

Polyethylene foams were produced in the same manner as Example I-1.

Using the formulas shown below in Table 2-A-V, blowing compositions comprising 227 and 32 and/or 143a according to the invention were prepared. In Table 2-B-V, blowing agents outside the compositional range of the invention are shown as Comparative Examples V-1 through V-3.

The above blowing agents were respectively injected into the resin material in the mixing ratios indicated in Table 2-A-V and Table 2-B-V.

The results are set forth in Table 2-A-V and Table 2-B-V.

**Table 2-A-V**

| Example No. | Blowing agent | Composition (%) | Mixing ratio (parts) | Foam density (g/cm³) | Foam stability (%) | Appearance |
|---|---|---|---|---|---|---|
| V-1 | 227 | 90 | 13.9 | 0.036 | 94 | ⓞ |
| | 32 | 10 | | | | |
| V-2 | 227 | 70 | 10.1 | 0.035 | 96 | ⓞ |
| | 32 | 30 | | | | |
| V-3 | 227 | 50 | 8.6 | 0.035 | 94 | ⃝ |
| | 32 | 50 | | | | |
| V-4 | 227 | 90 | 15.4 | 0.035 | 96 | ⓞ |
| | 143a | 10 | | | | |
| V-5 | 227 | 70 | 13.0 | 0.035 | 96 | ⓞ |
| | 143a | 30 | | | | |
| V-6 | 227 | 50 | 11.2 | 0.034 | 92 | ⃝ |
| | 143a | 50 | | | | |
| V-7 | 227 | 80 | 12.8 | 0.036 | 96 | ⓞ |
| | 32 | 10 | | | | |
| | 143a | 10 | | | | |
| V-8 | 227 | 70 | 11.4 | 0.035 | 96 | ⓞ |
| | 32 | 15 | | | | |
| | 143a | 15 | | | | |
| V-9 | 227 | 50 | 9.3 | 0.035 | 94 | ⃝ |
| | 32 | 25 | | | | |
| | 143a | 25 | | | | |

**Table 2-B-V**

| comparative Example No. | Blowing agent | Composition (%) | Mixing ratio (parts) | Foam density (g/cm³) | Foam stability (%) | Appearance |
|---|---|---|---|---|---|---|
| V-1 | 227 | 100 | 17.0 | 0.045 | 80 | x |
| V-2 | 32 | 100 | 5.2 | 0.030 | 80 | x |
| V-3 | 143a | 100 | 8.4 | 0.032 | 85 | △ |

In Comparative Examples V-1, V-2 and V-3 where 227, 32 and 143a were used respectively as the blowing agent, the product foams were poor in dimensional stability and each had a copiously wrinkled surface.

It is apparent from the data in Table 2-A-V and Table 2-B-V that compared with the control blowing agents, the blowing compositions of the present invention are superior in all the parameters of density, stability and appearance.

### Examples VI-1 through VI-9 and Comparative Examples VI-1 through VI-3

Polyethylene foams were produced in the same manner as Example I-1.

Using the formulas shown below in Table 2-A-VI, blowing compositions comprising 227 and 152a and/or LPG according to the invention were prepared. In Table 2-B-VI, blowing agents outside the compositional range of the invention are shown as Comparative Examples VI-1 through VI-3.

The above blowing compositions and agents were respectively injected into the resin material in the mixing ratios indicated in Table 2-A-VI and Table 2-B-VI.

The results are set forth in Table 2-A-VI and Table 2-B-VI.

**Table 2-A-VI**

| Example No. | Blowing agent | Composition (%) | Mixing ratio (parts) | Foam density (g/cm³) | Foam stability (%) | Appearance |
|---|---|---|---|---|---|---|
| VI-1 | 227 | 90 | 14.7 | 0.036 | 94 | ⓞ |
| | 152a | 10 | | | | |
| VI-2 | 227 | 70 | 11.3 | 0.036 | 95 | ⓞ |
| | 152a | 30 | | | | |
| VI-3 | 227 | 50 | 9.5 | 0.032 | 94 | ⃝ |
| | 152a | 50 | | | | |
| VI-4 | 227 | 90 | 14.2 | 0.035 | 92 | ⓞ |
| | LPG | 10 | | | | |
| VI-5 | 227 | 70 | 10.5 | 0.035 | 94 | ⓞ |
| | LPG | 30 | | | | |
| VI-6 | 227 | 50 | 8.7 | 0.032 | 90 | ⃝ |
| | LPG | 50 | | | | |
| VI-7 | 227 | 80 | 12.6 | 0.035 | 94 | ⓞ |
| | 152a | 10 | | | | |
| | LPG | 10 | | | | |
| VI-8 | 227 | 70 | 10.3 | 0.034 | 96 | ⓞ |
| | 152a | 15 | | | | |
| | LPG | 15 | | | | |
| VI-9 | 227 | 50 | 9.0 | 0.032 | 94 | ⃝ |
| | 152a | 25 | | | | |
| | LPG | 25 | | | | |

**Table 2-B-VI**

| comparative Example No. | Blowing agent | Composition (%) | Mixing ratio (parts) | Foam density (g/cm³) | Foam stability (%) | Appearance |
|---|---|---|---|---|---|---|
| VI-1 | 227 | 100 | 17.0 | 0.045 | 80 | x |
| VI-2 | 152a | 100 | 6.6 | 0.034 | 90 | △ |
| VI-3 | LPG | 100 | 5.8 | 0.030 | 80 | x |

In Comparative Examples VI-2 and VI-3 where 152a and LPG were respectively used as the blowing agent, the product foams were poor in dimensional stability and each had a copiously wrinkled surface.

It is apparent from the data in Table 2-A-VI and Table 2-B-VI that compared with the control blowing compounds, the blowing compositions of the present invention are superior in all the parameters of density, stability and appearance.

## Claims

1. A blowing composition comprising (1) at least one member of the group consisting of pentafluoroethane, 1,1,1,2-tetrafluoroethane and 1,1,1,2,3,3,3-heptafluoropropane and (2) either difluoromethane and/or 1,1,1-trifluoroethane or 1,1-difluoroethane and/or LPG.

2. A blowing composition according to claim 1 comprising (1) pentafluoroethane and (2) difluoromethane and/or 1,1,1-trifluoroethane.

3. A blowing composition according to claim 2 comprising (1) 80 to 20% of pentafluoroethane and (2) 20 to 80% of difluoromethane and/or 1,1,1-trifluoroethane.

4. A blowing composition according to claim 2 comprising (1) 80 to 30% of pentafluoroethane and (2) 20 to 70% of difluoromethane.

5. A blowing composition according to claim 2 comprising (1) 80 to 50% of pentafluoroethane and (2) 20 to 50% of 1,1,1-trifluoroethane.

6. A blowing composition according to claim 2 comprising (1) 80 to 40% of pentafluoroethane and (2) 10 to 30% of difluoromethane and 10 to 30% of 1,1,1-trifluoroethane.

7. A blowing composition according to claim 1 comprising (1) pentafluoroethane and (2) 1,1-difluoroethane and/or LPG.

8. A blowing composition according to claim 7 comprising (1) 90 to 10% of pentafluoroethane and (2) 10 to 90% of 1,1-difluoroethane and/or LPG.

9. A blowing composition according to claim 7 comprising (1) 80 to 20% of pentafluoroethane and (2) 10 to 40% of 1,1-difluoroethane and 10 to 40% of LPG.

10. A blowing composition according to claim 7 comprising (1) 90 to 70% of pentafluoroethane and (2) 10 to 30% of 1,1-difluoroethane.

11. A blowing composition according to claim 1 (1) 1,1,1,2-tetrafluoroethane and (2) difluoromethane and/or 1,1,1-trifluoroethane.

12. A blowing composition according to claim 11 comprising (1) 80 to 20% of 1,1,1,2-tetrafluoroethane and (2) 20 to 80% of difluoromethane and/or 1,1,1-trifluoroethane.

13. A blowing composition according to claim 11 comprising (1) 80 to 20% of 1,1,1,2-tetrafluoroethane and (2) 10 to 40% of difluoromethane and 10 to 40% of 1,1,1-trifluoroethane.

14. A blowing composition according to claim 11 comprising (1) 80 to 50% of 1,1,1,2-tetrafluoroethane and (2) 20 to 50% of difluoromethane.

15. A blowing composition according to claim 1 comprising (1) 1,1,1,2-tetrafluoroethane and (2) 1,1-difluoroethane and/or LPG.

16. A blowing composition according to claim 15 comprising (1) 90 to 10% of 1,1,1,2-tetrafluoroethane and (2) 10 to 90% of 1,1-difluoroethane and/or LPG.

17. A blowing composition according to claim 15 comprising (1) 80 to 20% of 1,1,1,2-tetrafluoroethane and (2) 10 to 40% of 1,1-difluoroethane and 10 to 40% of LPG.

18. A blowing composition according to claim 15 comprising (1) 90 to 80% of 1,1,1,2-tetrafluoroethane and (2) 10 to 20% of 1,1-difluoroethane.

19. A blowing composition according to claim 1 comprising (1) 1,1,1,2,3,3,3-heptafluoropropane and (2) difluoromethane and/or 1,1,1-trifluoroethane.

20. A blowing composition according to claim 19 comprising (1) 90 to 10% of 1,1,1,2,3,3,3-heptafluoropropane and (2) 10 to 90% of difluoromethane and/or 1,1,1-trifluoroethane.

21. A blowing composition according to claim 19 comprising (1) 80 to 20% of 1,1,1,2,3,3,3-heptafluoropropane and (2) 10 to 40% of difluoromethane and 10 to 40% of 1,1,1-trifluoroethane.

22. A blowing composition according to claim 19 comprising (1) 90 to 30% of 1,1,1,2,3,3,3-heptafluoropropane and (2) 10 to 70% of 1,1,1-trifluoroethane.

23. A blowing composition according to claim 19 comprising (1) 90 to 20% of 1,1,1,2,3,3,3-heptafluoropropane and (2) 10 to 80% of difluoromethane.

24. A blowing composition according to claim 1 comprising (1) 1,1,1,2,3,3,3-heptafluoropropane and (2) 1,1-difluoroethane and/or LPG.

25. A blowing composition according to claim 24 comprising (1) 90 to 10% of 1,1,1,2,3,3,3-heptafluoropropane and (2) 10 to 90% of 1,1-difluoroethane and/or 10 to 90% of LPG.

26. A blowing composition according to claim 24 comprising (1) 80 to 20% of 1,1,1,2,3,3,3-heptafluoropropane and (2) 10 to 40% of 1,1-difluoroethane and 10 to 40% of LPG.

27. A blowing composition according to claim 24 comprising (1) 90 to 70% of 1,1,1,2,3,3,3-heptafluoropropane and (2) 10 to 30% of 1,1-difluoroethane.

28. A blowing composition according to claim 24 comprising (1) 90 to 85% of 1,1,1,2,3,3,3-heptafluoropropane and (2) 10 to 15% of LPG.

29. A method for producing a thermoplastic resin foam characterized by using the composition claimed in claim 2 as the blowing agent.

30. A method for producing a thermoplastic resin foam characterized by using the composition claimed in claim 7 as the blowing agent.

31. A method for producing a thermoplastic resin foam characterized by using the composition claimed in claim 11 as the blowing agent.

32. A method for producing a thermoplastic resin foam characterized by using the composition claimed in claim 15 as the blowing agent.

33. A method for producing a thermoplastic resin foam characterized by using the composition claimed in claim 19 as the blowing agent.

34. A method for producing a thermoplastic resin foam characterized by using the composition claimed in claim 24 as the blowing agent.
